# EUROPEAN PATENT APPLICATION

(11) **EP 2 200 249 A1**
(43) Date of publication of application: **23.06.2010**
(21) Application number: 08171902.3
(22) Date of filing: 17.12.2008
(51) Int. Cl.: H04L 29/06, H04L 12/26

(54) **Network analysis**

(71) Applicant: ABB Research Ltd., 8050 Zürich (CH)
(72) Inventor: Brändle, Markus, CH-5443, Niederrohrdorf (CH); Schierholz, Ragnar, CH-4052, Basel (CH); Hadeli, Hadeli, CH-5400, Baden (CH); Tuduce, Christian, San Jose, CA CA 95134 (US)
(74) Representative: ABB Patent Attorneys

(57) **Abstract**

A technique for automatic analysis of a network, in which network specification information (11) is converted into a single intermediate representation (13) of the network. The intermediate representation can then be used to determine security parameters (21), and expected data traffic parameters (31).

## Description

### FIELD OF THE INVENTION

The present invention relates to network analysis, for example for use in configuring network security.

### BACKGROUND OF THE INVENTION

More and more standards and regulations require critical infrastructure systems and networks to be protected against electronic attacks. These requirements add to the workload of commissioning engineers and/or operators. Setting up security measures to protect control systems is not a trivial task. In the control system environment, operators or commissioning engineers are rarely security experts and often not well-trained to deal with the cyber security of control systems.

Security measures commonly used in environments like office networks are geared towards fairly dynamic systems. The legitimate communications are difficult to predict, because of the dynamics in the use of the network. On the contrary, in an industrial environment, the legitimate traffic is predictable. However, current methods and tools for configuring network security measures and for continuously monitoring network security fail to leverage these deterministic characteristics of industrial environments.

Various types of security measures can be found in a typical IT environment such as an office network. For example, firewalls are used to separate a network from external networks and to split it up into several sub-networks. Firewalls are configured by rules which describe which network traffic shall be allowed to pass the network perimeters and which network traffic is supposed to be blocked. State-of-the-art firewalls use traffic characteristics such as the source address, the destination address, the service used (e.g. web traffic vs. e-mail traffic), the state of the session (with regard to the protocol used, e.g. TCP) and/or deep inspection of network packets (with regard to the protocol used, e.g. HTTP or SMTP).

While firewalls protect networks and sub-networks at their perimeter, there are also security measures which are typically applied within the network to be protected. For example, intrusion detection systems (IDS) are used to identify intrusions (e.g. by hackers, viruses or worms). However, current available IDSs have shortcomings. There are currently two typical approaches to intrusion detection systems (IDS). One uses signatures for known attacks to detect them when they happen in the monitored network. However, this approach can only detect attacks which are known and for which a signature has been created. If the attack is new or a sufficiently modified version of a known attack, the signatures won't match and the attack can't be detected. Furthermore, any traffic that is not seen on the network, cannot be matched against a signature, thus missing traffic is not detected by available signature-based IDS. The second approach uses a learning phase to build a statistical model from assumed normal system behaviour and later on detects any deviation from the statistical model. However, this approach largely depends on the system capturing every communication that may be considered normal in the network during the learning phase. For systems which contain events that happen rarely (e.g. emergency modes in control systems) this can be difficult to ensure. Thus, both approaches have the weakness that they either produce too many alarms when no attack is present (false positive), or they produce too few alarms when attacks are happening (false negative). Particularly, they do not leverage the deterministic characteristics of a control system.

Further security measures include access control, which determines which actors (i.e. users or system components) shall be allowed which level of access to different resources in the network or system, or detailed logging, which collects information about relevant events as they happen in the network or system.

In general, no methods or tools exist currently that take available system design information from control systems and automatically transform it into configuration data for security measures of any type (firewall, IDS, access control or other). In addition, there is also no method or tool that takes available system design information from control systems and transform it into a model of the communication, or configuration data to detect any missing expected traffic in the system. For the latter case, even the Commercial-Off-The Shelf software on intrusion detection and/or anomaly detection can only detect/scan actual traffic for any malicious item if a signature/model on such malicious/anomaly traffic is made available. Even if signatures/models are available, there is no determinism whether the signatures/models cover all possible malicious traffic or other anomalies.

It is, therefore, desirable to provide techniques that can address the short comings of the previously-considered systems.

### SUMMARY OF THE INVENTION

Embodiments of aspects of the present invention can provide:

Firstly, automated generation of a model of the expected communication in a control system network based on available system information;

Secondly, automated generation of configuration data for various network security measures based on a generated model;

Thirdly, a method/tool to monitor and alert on the absence of expected traffic based on the generated model.

According to a first aspect of the present invention, there is provided a method of analysing a network, comprising the steps of receiving description data which includes specification information concerning a specification of a network, automatically determining model data by extracting explicit and implicit data from the description data, the explicit data being explicitly contained in the description data and the implicit data being derived from the explicit data and predetermined rules and conditions, and building a representation of the network using such model data.

Such a method may further comprise automatically determining a plurality of security parameters from the representation of the network, and configuring security measures using such security parameters.

According to another aspect of the present invention, there is provided a method of analysing a network, comprising the steps of automatically determining a plurality of security parameters from a representation of the network, and configuring security measures using such security parameters, wherein the representation results from receiving description data which includes specification information concerning a specification of a network, automatically determining model data by extracting explicit and implicit data from the description data, the explicit data being explicitly contained in the description data and the implicit data being derived from the explicit data and predetermined rules and conditions, and building a representation of the network using such model data.

In such methods, the security parameters may include parameters for a firewall, and the method may comprise generating configuration data for such a firewall to prevent unauthorised access in dependence upon such parameters.

In such methods, the security parameters may include parameters for intrusion detection, and the method may comprise configuring an intrusion detection unit in dependence upon such parameters.

In such methods, the security parameters may include parameters for expected data traffic, and the method may comprise automatically monitoring data traffic, and signalling a lack of expected data traffic in dependence upon such parameters.

The model data may include information concerning at least one of expected data traffic, inter-node communication patterns, and device security information. The description data may represent design information for the network. The specification information may include information regarding at least one of network node information, node interconnection information, installed software information, and device configuration information.

According to another aspect of the present invention, there is provided a system for analysing a network, comprising a parser connected to receive description data which includes specification information concerning a specification of a network, wherein the parser is operable automatically to determine model data by extracting explicit and implicit data from received description data, the explicit data being explicitly contained in the description data and the implicit data being derived from the explicit data and predetermined rules and conditions, and to build representation data of such a network using such model data.

Such a system may further comprise a configuration generator connected to receive representation data from the parser, and operable to determine automatically a plurality of security parameters from such received representation data for transmission to a security unit.

Such a system may further comprise a security unit connected to receive security parameters from the configuration generator, and operable to execute at least one security measure using such received security parameters.

According to another aspect of the present invention, there is provided a system for securing a network, comprising a security unit connected to receive security parameters, and operable to configure at least one security measure using such received security parameters, wherein the security parameters are generated by a configuration generator connected to receive representation data, and operable to determine automatically a plurality of security parameters from such received representation data for transmission to the security unit, and wherein the representation data are generated by a parser connected to receive description data which includes specification information concerning a specification of a network, the parser being operable automatically to determine model data by extracting explicit and implicit data from received description data, the explicit data being explicitly contained in the description data and the implicit data being derived from the explicit data and predetermined rules and conditions, and to build representation data of such a network using such model data.

The security parameters may include parameters for a firewall, and the security unit may then be operable to execute a firewall to prevent unauthorised network access in dependence upon such parameters.

The security parameters may include parameters for expected data traffic, and the security unit may then be operable automatically to monitor network data traffic, and to signal a lack of expected data traffic in dependence upon such parameters.

### BRIEF DESCRIPTION OF THE DRAWINGS

Figure 1 is a block diagram illustrating an overall concept of a system embodying the present invention;
Figure 2 is a block diagram illustrating one possible implementation of the concept of Figure 1;
Figure 3 is a flow diagram illustrating steps in a method embodying one aspect of the present invention;
Figure 4 is a block diagram illustrating elements in an implementation of the present invention;
Figure 5 is an example extract SCL file; and
Figure 6 is an example extract of an ABB (R) System 800xA System Planner file.

### DETAILED DESCRIPTION OF THE PREFERRED EMBODIMENTS

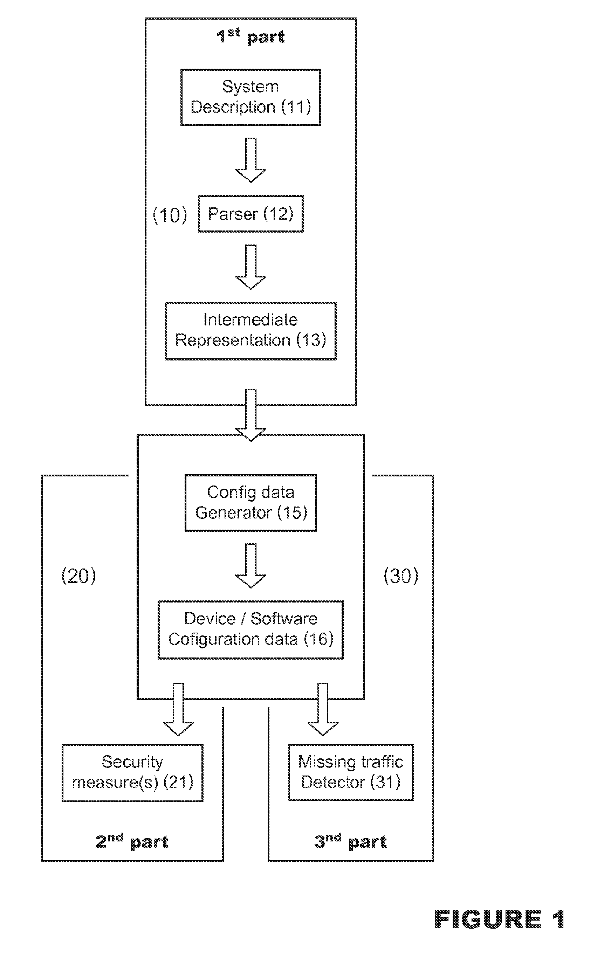

Figure 1 is a block diagram illustrating an overall concept of a system embodying the present invention. The concept is divided into three parts: a first part 10 serves to convert system description data 11 into an intermediate representation 13 using a parser 12. The parser 12 extracts from the system description data 11 explicit information relevant to the network setup and its security. In addition, the parser derives information that is implicitly stored in the system description data 11. The implicit information is derived by interpreting the explicitly stated information using predetermined rules and conditions. For example, the semantics of the system description language can be interpreted to derive additional information required to configure security settings. This information is stored in the intermediate representation 13. A configuration data generator 15 translates the intermediate representation into configuration data 16 for networking devices/software. This configuration data is supplied to the networking devices/software, and may be stored, or may be transient in nature. A second part 20 of the concept makes use of the configuration data 16 to develop security measures 21 specifically for the network. A third part 30 of the concept uses the configuration data to produce configuration data for a missing traffic detector 31 to detect when expected data traffic is missing in the network. It will be appreciated that the third part 30 is really a subset of the second part 20, since the missing traffic detector can be considered as a security measure for the network

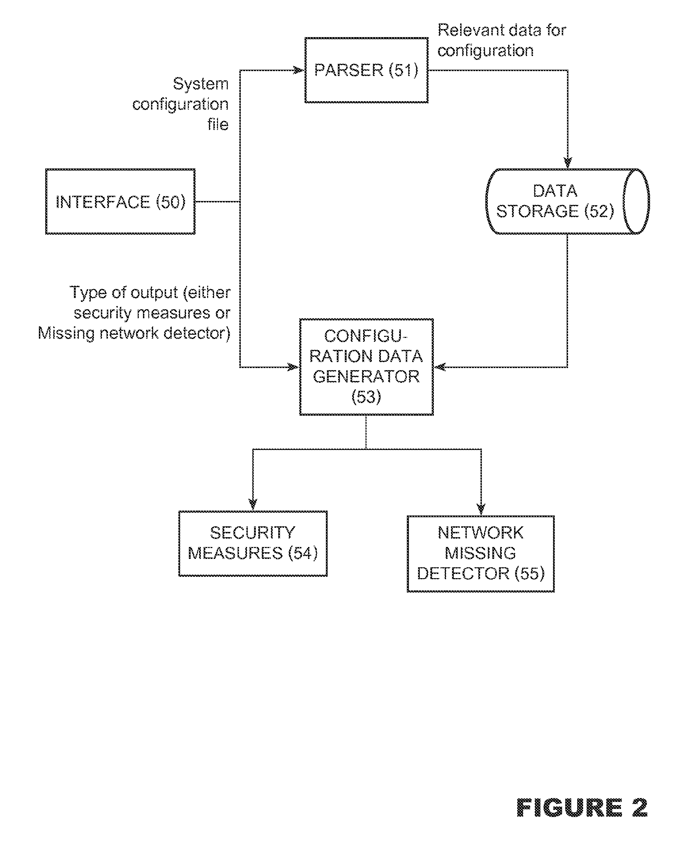

Figure 2 is a block diagram illustrating one possible implementation of the concept of the present invention. The Figure 2 implementation comprises several functional blocks. An input interface 50 is provided for receiving input data, and supplies system description data to a parser 51 for generating an intermediate representation from that system description data. The parser 51 supplies data to a data storage device 52 which stores the intermediate representation information. It is to be appreciated that the data storage device 52 may be provided by a persistent storage device such as a hard disk drive, solid state disk drive, or flash memory drive, or may be provided by non-persistent storage, for example a random access memory (RAM) or other memory device.

A configuration data generator 53 retrieves the stored intermediate representation information, generates appropriate configuration data and then supplies the configuration data to a security unit 54, or a missing traffic detector 55. The security unit 54 provides any selected security measures in dependence upon the configuration information received from the configuration data generator 53. The missing traffic detector 55 is a specific type of security measure, and monitors the network data traffic for missing expected traffic, in accordance with information contained in the received configuration data. It will be readily appreciated that the security measures provided by the security unit 54 can be any appropriate security measure, and that the configuration data generator 53 is operable to produce any suitable configuration data.

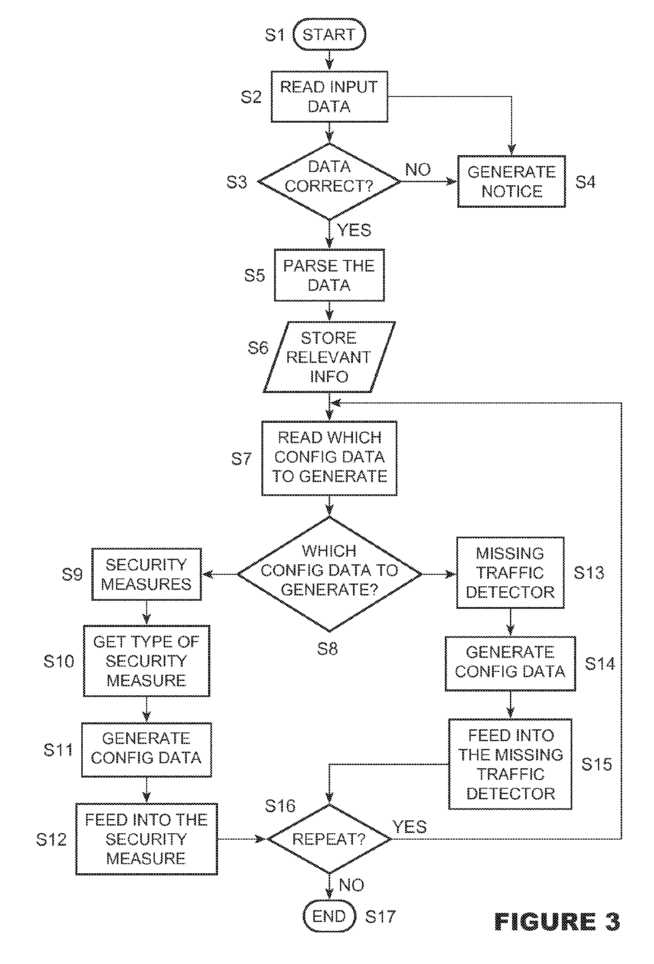

Figure 3 is a flow diagram illustrating steps in a method embodying various aspects of the present invention. Reference will also be made to Figures 1 and 2. The process begins at step s1, and an input system description data 11 is read (step S2) by the parser 51, which determines whether the data 11 is of the correct type and format (step S3). If the data is incorrect in any way, an appropriate notice is generated (step S4) and presented to an appropriate interface. If the data is correct, then it is automatically converted (step S5) to an intermediate representation 13 by the parser 51. The intermediate representation 13 is then stored (step S6) in the data storage device 52. The intermediate representation 13 provides a model of the network - that is, the intermediate representation includes information that models available nodes in the network, communication patterns between those nodes, security of the underlying networking and communication patterns, and is based on the information stored explicitly and implicitly in the system description data. As described above, useful security information is derived from implicitly held information in the system description data by analysis of that information, its interrelationships, and the semantics of the system description language.. It is determined (step S7) which configuration data is to be generated automatically. Alternatively, all possible configurations, or a predefined set of configurations, could be generated by the system. If security measures data is to be generated then the process moves to step S9. The type of security measure to be determined is retrieved (step S10), and the appropriate configuration data is generated (step S11) by the configuration data generator 53. The security measures configuration data is then supplied (step S12) to the security unit 54.

The security measures may include defining rules for a firewall, detecting unexpected data traffic on the network, and other suitable measures. A firewall is a device which permits or blocks data traffic based on source (sender), destination (receiver), service used and/or state of the session between source and destination. The configuration data provided by the configuration data generator is a detailed list of all allowed network connections between various nodes in the target network, specifying source, destination and service for each allowed connection. The configured firewall then has a complete list of allowed connections and can block anything else.

Intrusion detection uses signatures to differentiate between normal traffic and malicious or otherwise undesired traffic, so that unexpected data traffic can be detected. The configuration data provides signatures describing known weaknesses in, and attack patterns against, the protocols and services that are used in the network modelled by the intermediate representation. Furthermore it provides signatures for those known kinds of traffic which are not desired at all in the network (e.g. e-mail traffic may not be desired in a control system and thus a signature detecting any e-mail traffic could be generated). If any traffic is seen that matches any of the defined patterns/signatures, an alarm is raised.

Other examples of a security measure include an access control system which controls access to resources on the network and which can alert if a user tries to use a resource in an unauthorised manner.

The security unit 54 implements the security measures and then causes an alarm condition if a breach is determined.

If missing traffic detector configuration data is to be generated, then the process moves from step S8 to step S13, and the appropriate configuration data is generated (step S14), and then supplied (step S15) to the missing traffic detector 55.

The missing traffic detector 55 watches for desired data traffic. If such desired data traffic is not detected, then a security breach is inferred, and an alarm is raised. The configuration data provides a model of expected traffic describing the characteristics of the traffic, e.g. source, destination, service used and frequency of expected occurrence. The missing traffic detector then operates to detect the absence of such expected traffic and on such absence, raises an alert.

The generation of configuration data can be repeated as required, as determined by step S16. If no further configuration data are required, then the process is ended (step S17).

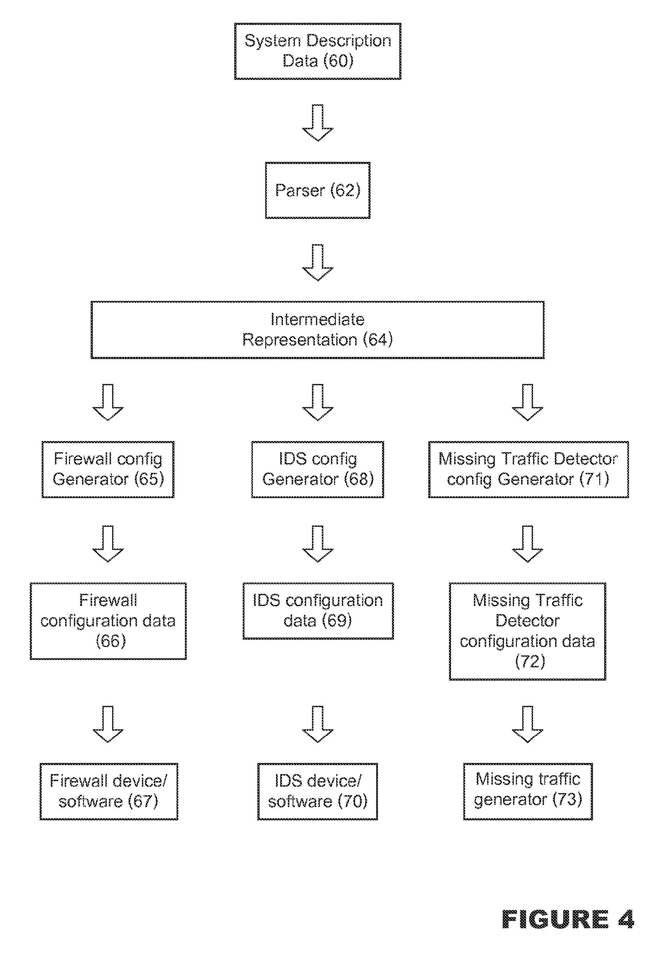

Different embodiments of this concept can implement different parsers and/or different configuration data generators. Two examples are described below, both reference to Figure 4: the first translates system description data, for example IEC 61850 SCL files, into configuration data, and the second translates ABB(R) System 800xA System Planner files into configuration data. The SCL files and the System Planner files are referred to as system description data for the sake of clarity.

The first example describes the automatic translation of SCL system description data into intrusion detection system (IDS) configuration, firewall configuration files and missing traffic detector configuration data. The system description data 60 describes the components and the configuration parameters of all devices in a network. A parser 62 extracts explicit information that is security-relevant, and stores that information as an intermediate representation 64. In addition, the system description data 60 is analysed to extract implicit security relevant information from the explicit data and a set of predetermined rules and conditions, such as the semantics of the description language.

For example, the system description file 60 data may define entities such as intelligent electronic devices (IEDs), including the network address of the IED. Within such entities the data may define GOOSE message blocks (GSE). If such a GOOSE message block is found, the parser 62 generates a model element defining GOOSE traffic from the IED's network address as expected traffic. Furthermore, traffic using the protocols MMS and ICMP is by default legitimate traffic, even though not explicitly specified in an SCL file. In order to generate this implicit information, the parser 62 refers to stored rules and information concerning the system description language and data.

The intermediate representation 64 can be further processed or optimized (e.g., ordering of the intermediate representation to generate firewall rules more easily).

Based on the intermediate representation 64:
1. A firewall configuration data generator 65 generates configuration data (rules) 66 for a firewall. In one example, the firewall can be used to detect and block any unintended (unexpected) traffic. From the intermediate representation 64, details of communications which are allowed or disallowed are extracted.
2. An IDS configuration data generator 68 generates configuration data 69 for an intrusion detection system (IDS) 70. In this case, based on the input data, the IDS can be configured to alert on data traffic or malicious data traffic that should not be allowed in the systems.
3. A missing traffic detector generator 71 generates configuration data 72 for a missing traffic detector 73, for example to detect missing GOOSE traffic, as described in more detail below.

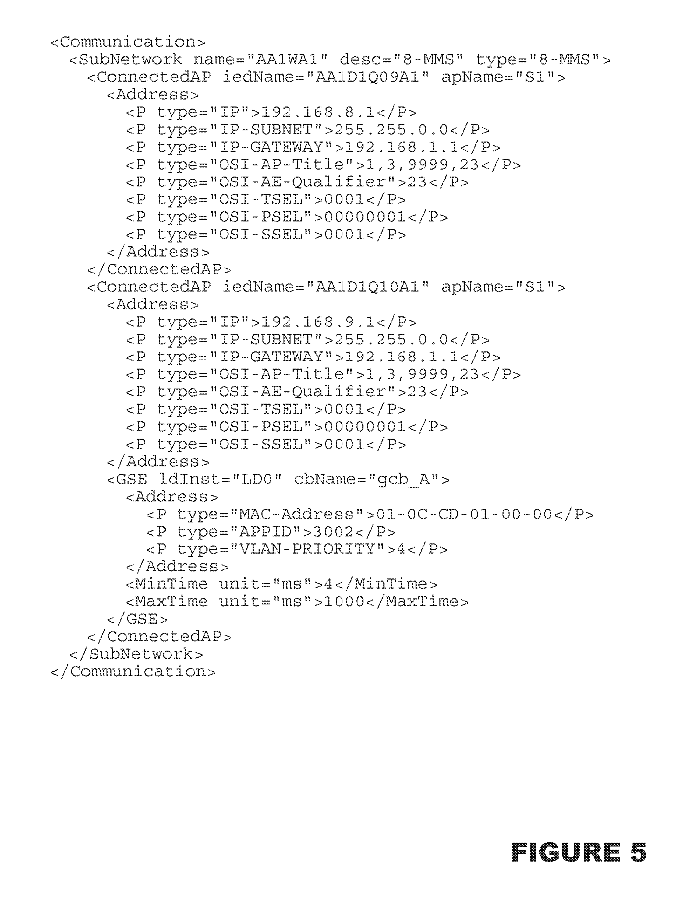

A particular example of processing an extract from an SCL file will now be described. It is to be appreciated that this file merely represents one possible example, and should not be construed as limiting in any way. The example extract SCL file is shown in Figure 5, and several characteristics are automatically determined:
1. There are two IEDs in the system (see the ConnectedAP block), i.e. AA1D1Q09A1 and AA1D1Q10A1
2. Only AA1 D1Q10A1 can send out GOOSE message (see the GSE block)
3. ICMP and MMS are by default allowed

Having this example, the SCL parser 62 extracts the necessary information, such that the following configuration can be generated:
1. The firewall configuration data generator 65 generates, in this example, firewall rules 66 that allow only traffic that comes and goes to the listed IP addresses, in this case 192.168.8.1 and 192.168.9.1.
2. The IDS configuration data generator, for this example:
   - generates a signature that detects malicious MMS traffic, for example traffic exploiting known weaknesses in the protocol version used or known weaknesses in product versions used, and
   - detects if there is any GOOSE message apart from the one from AA1D1Q10A1
3. The missing traffic detector generator 71 generates configuration data 72 to enable the missing traffic generator 73 to detect any missing GOOSE traffic from AA1D1Q09A1.

A second example describes the translation of ABB(R) System 800xA System Planner files into intrusion detection system (IDS) configuration and firewall configuration data. The System Planner files contain a description of a system installation. Based on these files, the installer installs and configures all the software components of the system. The parser 62 extracts explicit information that is security-relevant, and stores that information as an intermediate representation 64. In addition, the system description data 60 is analysed to extract implicit security relevant information from the explicit data and the semantics of the description language. The implicit information is also stored in the intermediate representation 64, in a similar manner to the previous example. The system then operates as follows:
1. The firewall configuration data generator 65 generates rules 66 to block disallowed traffic and allow allowed traffic. For instance, a typical ABB(R) System 800xA includes several elements, each of which provides some services. Each service allows only communication via one or several determined protocol(s) and port(s). Hence, unused ports are not used for communication and thus need to be blocked.
2. The IDS configuration data generator 68 generates the configuration data 69 for an IDS 70. For instance, the generator can create configuration data to guard the data bus traffic, for example an industry standard MODBUS.
3. The missing traffic detector generator 71 generates configuration data 72 for the missing traffic detector 73, for instance data for history log server that tracks and stores system changes, predefined data points and the like.

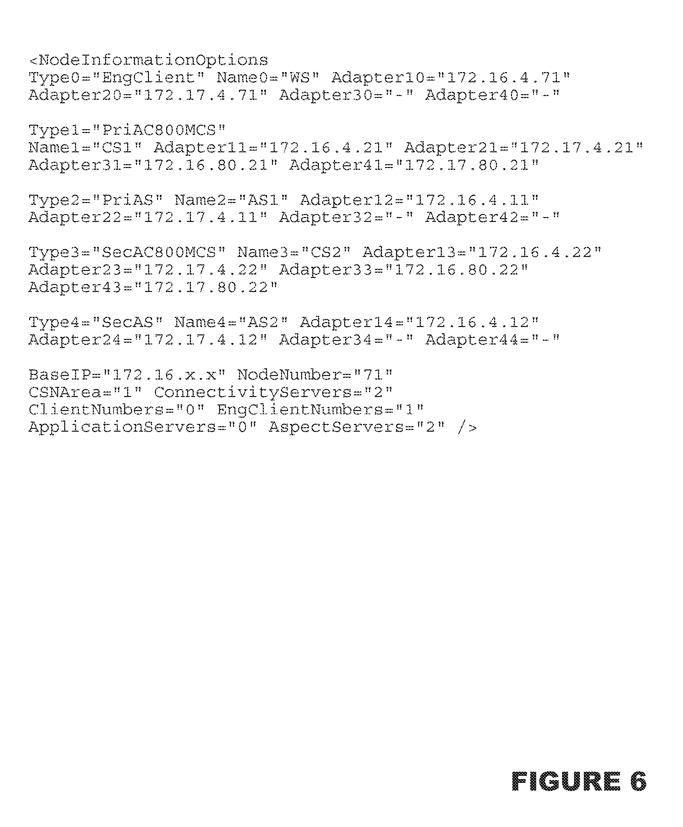

An example extract of an ABB (R) System 800xA System Planner file is shown in Figure 6. Once again, this file extract is described merely by way of example only, and should not be considered as limiting the scope of the invention.

In the given ABB (R) System 800xA System Planner file, it is possible to identify the following characteristics:
1. There are five nodes: EngClient, PriAC800MCS, PriAS, SecAC800MCS, and SecAS;
2. Each node has at least two IP addresses; and
3. Traffic for redundancy network routing protocol is available by default.

After receiving this example System Planner file, the parser 62 extracts necessary information, such that the following configuration can take place:
1. The firewall configuration data generator 65 can, for instance, generates firewall rules 66 that block unnecessary ports at every node. For instance, node PriAS and SecAS receive communication via port 80. Then, firewall rules 66 are generated to block every port except port 80.
2. The IDS configuration data generator 68, for this example, can:
   - generate a signature that detect malicious MODBUS traffic, for example traffic exploiting known weaknesses in the protocol version used or known weaknesses in product versions used.; and
   - generate a signature that detects undesired port 80 traffic to nodes other than PriAS and SecAS.
3. The missing traffic detector generator 71 generates configuration data 72 to detect missing history traffic, such as log files.

It will be appreciated from the description given above, that embodiments of the present invention are able to provide systems and techniques that automatically determine a network configuration from system description data and that can use the configuration information to determine security settings and missing traffic settings.

## Claims

1. A method of analysing a network, comprising the steps of:
receiving description data which includes specification information concerning a specification of a network;
automatically determining model data by extracting explicit and implicit data from the description data, the explicit data being explicitly contained in the description data and the implicit data being derived from the explicit data and predetermined rules and conditions; and
building a representation of the network using such model data.

2. A method as claimed in claim 1, further comprising
automatically determining a plurality of security parameters from the representation of the network; and
configuring security measures using such security parameters.

3. A method of analysing a network, comprising the steps of:
automatically determining a plurality of security parameters from a representation of the network; and
configuring security measures using such security parameters,
wherein the representation results from receiving description data which includes specification information concerning a specification of a network, automatically determining model data by extracting explicit and implicit data from the description data, the explicit data being explicitly contained in the description data and the implicit data being derived from the explicit data and predetermined rules and conditions, and building a representation of the network using such model data.

4. A method as claimed in claim 2 or 3, wherein the security parameters include parameters for a firewall, and the method comprises configuring a firewall to prevent unauthorised access in dependence upon such parameters.

5. A method as claimed in claim 2, 3 or 4, wherein the security parameters include parameters for intrusion detection, and the method comprises configuring an intrusion detection unit in dependence upon such parameters.

6. A method as claimed in any one of claims 2 to 5, wherein the security parameters include parameters for expected data traffic, and the method comprises automatically monitoring data traffic, and signalling a lack of expected data traffic in dependence upon such parameters.

7. A method as claimed in any one of the preceding claims, wherein the model data include information concerning at least one of expected data traffic, inter-node communication patterns, and device security information.

8. A method as claimed in any one of the preceding claims, wherein the description data represent design information for the network.

9. A method as claimed in any one of the preceding claims, wherein the specification information includes information regarding at least one of network node information, node interconnection information, installed software information, and device configuration information.

10. A system for analysing a network, comprising:
a parser connected to receive description data which includes specification information concerning a specification of a network, wherein the parser is operable automatically to determine model data by extracting explicit and implicit data from received description data, the explicit data being explicitly contained in the description data and the implicit data being derived from the explicit data and predetermined rules and conditions, and to build representation data of such a network using such model data.

11. A system as claimed in claim 10, further comprising:
a configuration generator connected to receive representation data from the parser, and operable to determine automatically a plurality of security parameters from such received representation data for transmission to a security unit.

12. A system as claimed in claim 11, further comprising a security unit connected to receive security parameters from the configuration generator, and operable to execute at least one security measure using such received security parameters.

13. A system for analysing a network, comprising a security unit connected to receive security parameters, and operable to configure at least one security measure using such received security parameters, wherein the security parameters are generated by a configuration generator connected to receive representation data, and operable to determine automatically a plurality of security parameters from such received representation data for transmission to the security unit, and wherein the representation data are generated by a parser connected to receive description data which includes specification information concerning a specification of a network, the parser being operable automatically to determine model data by extracting explicit and implicit data from received description data, the explicit data being explicitly contained in the description data and the implicit data being derived from the explicit data and predetermined rules and conditions, and to build representation data of such a network using such model data.

14. A system as claimed in any one of claims 10 to 13, wherein the security parameters include parameters for a firewall, and the security unit is operable to execute a firewall to prevent unauthorised network access in dependence upon such parameters.

15. A system as claimed in any one of claims 10 to 14, wherein the security parameters include parameters for expected data traffic, and the security unit is operable automatically to monitor network data traffic, and to signal a lack of expected data traffic in dependence upon such parameters.
